Europäisches Patentamt

European Patent Office

Office européen des brevets

(19)

(11) Numéro de publication: **0 051 538**
**A1**

(12) ·DEMANDE DE BREVET EUROPEEN

(21) Numéro de dépôt: 81401729.9

(22) Date de dépôt: 29.10.81

(51) Int. Cl.³: **C 03 C 17/23**
**C 03 C 17/25**

(30) Priorité: 29.10.80 JP 154676/80 U

(43) date de publication de la demande:
12.05.82 Bulletin 82/19

(84) Etats contractants désignés:
BE DE FR IT LU NL SE

(71) Demandeur: SAINT-GOBAIN VITRAGE
63, rue de Villiers
F-92209 Neuilly Sur Seine(FR)

(72) Inventeur: Fujimoto, Katsuji
1-chome, 8-56, Aobadai
Ichihara-shi Chiba-ken(JP)

(72) Inventeur: Hisamoto, Chiharu
1-chome, 7-C-144, Aobadai
Ichihara-shi Chiba-ken(JP)

(72) Inventeur: Higashimura, Toshiyuki
1-chome, 7-C-124, Aobadai
Ichihara-shi Chiba-ken(JP)

(74) Mandataire: Eudes, Marcel et al,
Saint-Gobain Recherche 39 Quai Lucien Lefranc
F-93304 Aubervilliers Cedex(FR)

(54) Installation de fabrication de verre revêtu d'un film d'oxydes métalliques.

(57) La présente invention concerne une installation de fabrication de verre plat revêtu d'un film d'oxydes métalliques par pulvérisation d'une solution de composés métalliques, dans laquelle, en plus des moyens traditionnels d'aspiration des gaz résiduaires disposés autour de la zone de pulvérisation (14), on prévoit une hotte d'extraction (19) en amont de la zone de pulvérisation, entre lesdits moyens traditionnels et les moyens délivrant le verre à haute température.

Une telle hotte d'extraction permet d'améliorer la qualité du verre fabriqué, et d'accroître la vitesse de déplacement du verre.

FIG.1

0051538

INSTALLATION DE FABRICATION DE VERRE

REVETU D'UN FILM D'OXYDES METALLIQUES

La présente invention concerne une installation de fabrication de verre plat revêtu d'un film d'oxydes métalliques dans laquelle on pulvérise sur le verre chaud en mouvement une solution de composés métalliques décomposables en oxydes à la chaleur.

Une installation de ce type est connue, notamment par le brevet français publié sous le numéro 2 211 411. Un ruban de verre, formé par exemple dans une installation de flottage, défile, toujours à haute température, au travers d'un poste de pulvérisation de la solution de composés métalliques. Ce poste comporte essentiellement un ou plusieurs pistolets pulvérisateurs de la solution, animés d'un mouvement transversal de va-et-vient au dessus du ruban de verre. Des bouches d'aspiration situées à proximité de la surface du verre, en amont et en aval de la zone balayée par le ou les pistolets pulvérisateurs, aspirent les gaz résiduaires résultant essentiellement de la décomposition thermique de la solution pulvérisée, mais pouvant également contenir des substances non décomposées. Toutefois, tous les gaz résiduaires ne sont pas parfaitement aspirés par les bouches d'aspiration. Une partie de ces gaz passe dans l'intervalle laissé elles et le verre et s'enfuit aussi bien vers l'amont que vers l'aval du poste de pulvérisation. Les substances non décomposées de ces gaz résiduaires se déposent alors sur les installations elles-mêmes, mais également sur le verre, y formant des souillures qui nuisent à la qualité de surface du verre revêtu.

Pour éliminer de tels inconvénients, on peut augmenter l'aspiration par les bouches d'aspiration pour entraîner plus complètement les gaz résiduaires, mais on favorise aussi l'entrée d'air froid extérieur dans la zone de pulvérisation, ce qui fait que la température nécessaire à la bonne décomposition de la solution de composés métalliques en oxydes ne peut plus être maintenue, que le rendement de décomposition décroît, que des défauts mouchetés apparaissent sur le verre, que la qualité du film déposé n'est plus bonne c'est-à-dire que les propriétés voulues ne sont pas atteintes et même que le verre refroidi trop brusquement se casse. Pour minimiser la fuite des gaz résiduaires, le débit de pulvérisation de la solution de composés métalliques doit être inférieur à une certaine valeur ; de ce fait, on ne peut pas augmenter la vitesse d'entraînement du verre et la productivité est réduite. Ceci est particulièrement sensible dans le cas du dépôt d'un film d'oxydes métalliques sur du verre mince : le verre est étiré beaucoup plus fortement et donc la vitesse d'entraînement du ruban de verre est plus élevée que lorsqu'il s'agit de verre plus épais, et le débit de pulvérisation doit être plus important. Mais en raison de la difficulté précitée, on ne peut pas augmenter le débit de pulvérisation, et en conséquence cette méthode de pulvérisation n'est pas adaptée au dépôt d'un film d'oxydes métalliques sur du verre plat mince.

En outre, lorsqu'on emploie une installation de flottage pour fabriquer le verre, il y a le risque que les vapeurs de solvants qui s'échappent vers l'amont atteignent les flammes sortant du bassin de flottage, s'enflamment et déclenchent une explosion.

Un autre inconvénient réside dans la salissure de l'environnement du poste de pulvérisation, car les déchets adhèrent partout.

La présente invention vise à éliminer les inconvénients précités et pour cela elle propose une installation de fabrication de verre plat revêtu d'un film d'oxydes métalliques, munie de moyens d'aspiration supplémentaires, en particulier vers l'amont du poste de pulvérisation, permettant ainsi d'évacuer plus complètement les gaz résiduaires qui s'échappent en particulier vers l'amont. On arrive ainsi à augmenter le rendement de dépôt du film d'oxydes métalliques, on peut fabriquer du verre ayant des caractéristiques optiques uniformes et un taux élevé de reflexion du rayonnement visible, on évite le risque d'inflammation des gaz résiduaires au contact des flammes de l'installation de flottage et on améliore l'environnement du poste de pulvérisation.

L'invention sera décrite plus en détail ci-après, en relation avec les figures qui représentent :

- figure 1 : une coupe longitudinale d'une installation conforme à l'invention ;

- figure 2 : une vue agrandie du poste de pulvérisation montrant de façon plus précise, en coupe longitudinale, les éléments essentiels dudit poste.

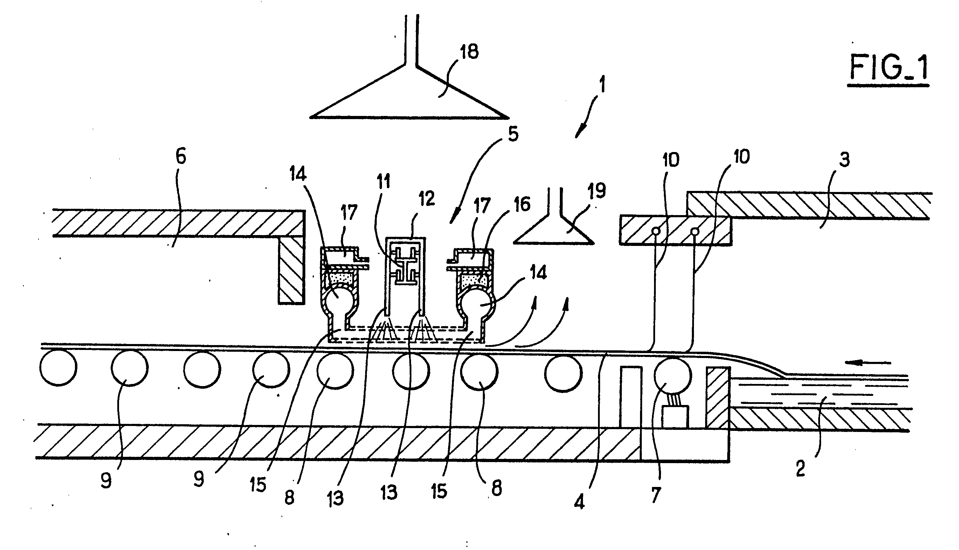

La figure 1 montre l'ensemble d'une installation 1 permettant de fabriquer du verre revêtu d'une couche d'oxydes métalliques. Du verre fondu déversé à débit constant sur un bain métallique 2 avance en se refroidissant progressivement pour former un ruban de verre 4, à l'intérieur d'une enceinte protectrice 3. A la sortie de cette enceinte, un rouleau 7 soulève le ruban 4 et le dégage du bain 2 pour le transférer vers une étenderie 6 grâce à un convoyeur à rouleaux 8. Un second convoyeur à rouleaux 9 fait traverser au ruban 4 l'étenderie à travers laquelle il se refroidit graduellement.

Un double rideau d'amiante 10 suspendu à la sortie de l'enceinte de flottage 3 et balayant toute la largeur du ruban 2 isole de l'extérieur l'atmosphère réductrice contenue dans cette enceinte. Entre sa sortie de l'enceinte de flottage 3 et son entrée dans l'étenderie 6, le ruban de verre 4 traverse la zone de pulvérisation. Dans cette zone, deux pistolets pulvérisateurs 13, dirigés vers la face supérieure du ruban de verre sont montés à une distance convenable de la surface de celui-ci, sur un chariot 12 qui se déplace dans un mouvement alternatif de va-et-vient sur des rails 11, disposés perpendiculairement à la direction de défilement du ruban de verre, parallèlement à la surface du verre. Deux collecteurs 14 d'évacuation des gaz résiduaires, raccordés à chacune de leurs extrémités à un dispositif d'aspiration non figuré, sont suspendus à des éléments isolants 16, parallèlement aux rails 11, de part et d'autre des pistolets 13. Ils portent des rampes d'aspiration 5 pourvues de bouches d'aspiration à leur partie inférieure le long du ruban de verre. Ils délimitent ainsi une zone de pulvérisation ou chambre de pulvérisation 5, à la partie supérieure de laquelle sont placés des organes 17 de soufflage d'air chaud.

Ces organes de soufflage sont disposés au-dessus des corps isolants 16, donc à un niveau supérieur à celui des ajutages des pistolets et des rampes d'aspiration.

En outre, une hotte d'aspiration 18 coiffe l'ensemble de la zone de pulvérisation 5, permettant ainsi d'aspirer les gaz résiduaires qui s'échappent vers le haut.

Un dispositif d'aspiration supplémentaire équipé d'une hotte

4

19 est installé en amont de la chambre de pulvérisation 5, entre ladite chambre 5 et l'enceinte de flottage 3, ou plus précisément entre le collecteur 14 d'amont et le rideau 10 d'amiante le plus extérieur. Cette hotte 19 est située entre 0,1 mètre et 1,5 mètre au dessus du ruban de verre.

Cette installation fonctionne comme décrit ci-après :

Le verre fondu déversé sur le bain 2 de métal fondu dans l'enceinte 3 forme une couche uniforme de verre qui avance à la surface dudit bain vers la sortie de l'enceinte 3. Le ruban de verre ainsi formé est extrait du bain de métal à l'aide du rouleau extracteur 7. Porté par des rouleaux 8, le ruban traverse la zone 5 de pulvérisation. Les pistolets 13 pulvérisent la solution de composés métalliques sur le verre. En tant que composés métalliques, on peut choisir des composés organiques de chrome, fer, cobalt, étain, titane, calcium, magnésium, ... et plus concrètement des acétonates de ces métaux, des acétylacétonates, ou l'ester propionique 2-méthylétain-2, ou bien des esters métallo-aliphatiques tels que des esters du titane, ...

Pour obtenir des films électro-conducteurs essentiellement, on dépose des composés d'étain, d'indium ou d'antimoine. Pour mettre en solution ces composés métalliques, on peut utiliser des solvants organiques tels que des alcools, le benzène, le tuolène, le xylène, le chloroforme, le chlorure de méthylène, ... Le méthanol et le benzène sont choisis le plus souvent, à cause de leur grande capacité à dissoudre de tels composés.

La solution de composés métalliques pulvérisés se décompose thermiquement au contact du ruban de verre à haute température, 600°C dans cette zone, et forme à sa surface une couche solide d'oxydes métalliques. Les gaz de décomposition chargés d'oxydes métalliques qui n'ont pas adhéré au verre, mélangés à de l'air injecté dans la chambre de pulvérisation 5 par les organes de soufflage 17 en particulier, sont aspirés par les bouches d'aspiration associées aux rampes d'aspiration 15.

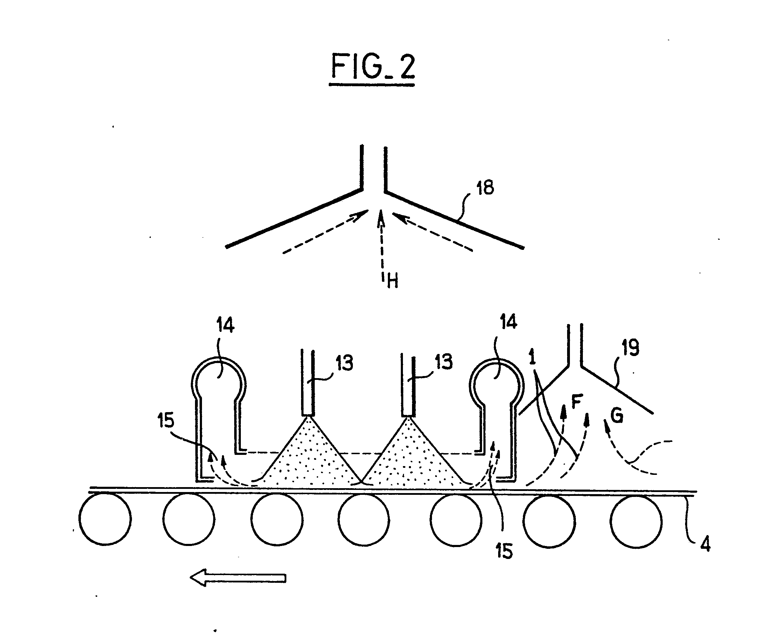

Les gaz qui s'échappent malgré tout vers l'amont sont aspirés par la hotte 19, suivent le trajet visualisé sur la figure 2 par les flèches F, et sont ensuite rejetés vers l'extérieur.

En outre, les flammes qui s'échappent de l'enceinte 3 de flottage sont également aspirées par la hotte 19, suivant le trajet visualisé par la flèche G sur la figure 2, ce qui les empêche d'atteindre la zone de pulvérisation 5.

5

Les gaz qui s'échappent vers le haut sont aspirés dans la hotte 18, suivant les flèches H (figure 2). Ainsi on peut sans augmenter la puissance d'aspiration des rampes 14, donc sans refroidir la zone de pulvérisation, éviter malgré tout que les déchets n'atteignent l'enceinte de flottage et ne s'y enflamment, et ceci, simplement en faisant fonctionner la hotte d'aspiration 19 qui ne perturbe pas les circuits d'air dans la chambre de pulvérisation.

Il en résulte une meilleure qualité du verre revêtu, en particulier un meilleur taux de réflexion du rayonnement, et une meilleure résistance à l'abrasion du revêtement ainsi déposé.

Il est également possible de pulvériser une plus grande quantité de produits qu'avec les installations antérieures et de ce fait, on peut augmenter la vitesse d'entraînement du verre et en particulier, fabriquer avec un meilleur rendement du verre mince revêtu.

Il en résulte une plus grande propreté des installations et de l'environnement du poste de pulvérisation.

1

REVENDICATION

1. Installation de fabrication de verre revêtu d'un film d'oxydes métalliques, comprenant des moyens délivrant un ruban de verre à haute température, en particulier une enceinte de flottage (3), une étenderie (6) de recuisson du ruban de verre (4), et entre les deux un poste (5) de pulvérisation d'une solution de composés métalliques sur la surface du verre, à l'aide de pistolets pulvérisateurs (13), ledit poste ayant des bouches d'aspiration (14) à proximité de la surface du verre, au moins en amont et en aval de la zone couverte par les pistolets pulvérisateurs, pour éliminer les déchets engendrés par la décomposition thermique de la solution de composés métalliques, caractérisée en ce qu'elle comporte en outre, entre les bouches d'aspiration (14) amont situées à proximité de la surface du verre (4) et les moyens (3) délivrant le ruban de verre à haute température, un moyen d'aspiration complémentaire, notamment une hotte (19) reliée à des moyens d'extraction.

2. Installation selon la revendication 1, caractérisée ne ce que la hotte (19) est placée entre 0,1 m et 1,5 m au-dessus du verre.

3. Installation selon l'une quelconque des revendications 1 ou 2, caractérisée en ce qu'elle comprend une hotte aspirante (18) coiffant l'ensemble de la chambre (5) de pulvérisation.

FIG_1

# FIG_2

))) Office européen
des brevets

**RAPPORT DE RECHERCHE EUROPEENNE**

Numéro de la demande

EP 81 40 1729

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| X | GB - A - 2 016 444 (SAINT-GOBAIN)<br><br>* figure 1; page 2, lignes 36-60 *<br><br>--<br><br>GB - A - 1 307 361 (PILKINGTON)<br><br>* figure 2; page 3, lignes 53-70 *<br><br>---------- | 1,2<br><br><br><br><br>1,3 | C 03 C 17/23<br>17/25 |

**DOMAINES TECHNIQUES RECHERCHES (Int. Cl. ³)**

C 03 C 17/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

X  Le présent rapport de recherche a été établi pour toutes les revendications

| Lieu de la recherche | Date d'achèvement de la recherche | Examinateur |
|---|---|---|
| La Haye | 28-01-1982 | BOUTRUCHE |

OEB Form 1503.1 06.78